# EUROPEAN PATENT APPLICATION

(11) **EP 4 098 336 A1**
(43) Date of publication of application: **07.12.2022**
(21) Application number: 22165841.2
(22) Date of filing: 31.03.2022
(51) Int. Cl.: A63F 13/80

(54) **USER INTERFACE FOR GAME**

(30) Priority: 04.05.2021 KR 20210057798
(71) Applicant: Netmarble N2 Inc., Seoul 08393 (KR)
(72) Inventor: SEO, Jae Kyoung, Yongin-si 16923 (KR); CHAE, Han Sol, Seoul 08521 (KR)
(74) Representative: Frenkel, Matthias Alexander

(57) **Abstract**

According to an exemplary embodiment of the present disclosure, a method of providing a user interface for a game in a user terminal includes: receiving a selection input for a first item among a plurality of items existing in a game map from a user; and changing a location of at least a part of one or more second items so that at least the part of the one or more second items corresponding to the first item is displayed to be adjacent to the first item at least based on the reception of the selection input.

## Description

### CROSS-REFERENCE TO RELATED APPLICATIONS

This application claims priority to and the benefit of Korean Patent Application No. 10-2021-0057798 filed in the Korean Intellectual Property Office on May 04, 2021, the entire contents of which are incorporated herein by reference.

### TECHNICAL FIELD

The present disclosure relates to a method of providing a user interface in a user terminal, and particularly, to a method of providing a user interface for playing a game in a user terminal.

### BACKGROUND ART

Recently, many people are enjoying various services using devices, such as a smart phone or a tablet PC. Particularly, the growth of the mobile game market is remarkable, and as the size of the market of the mobile game increases gradually and competition between companies intensifies, measures are being devised to prevent the users of the service from leaking and increase interest and loyalty to the service.

A puzzle game in the genre of the game is a simple game in which a given condition is completed and cleared through a set action within a certain rule. Accordingly, if users learn the basic rules, it is easy to progress the puzzle game, and the puzzle game is the game that can be easily played by anyone regardless of user base, age, gender, or nationality. The simplicity of such a puzzle game may be considered monotonous for the user.

Accordingly, recently, in the development of puzzle games, investment to add various contents, rules, functions, effects, or the like is increasing, and there is a demand in the art for a puzzle game that is sufficient to maintain user's interest and meet the needs while presenting differentiation from other puzzle games.

Korea Patent Application Laid-Open No. 2016-0076306 discloses a method for providing a block game.

### SUMMARY OF THE INVENTION

The present disclosure is conceived in response to the background art, and has been made in an effort to provide a user interface for a game.

The technical objects of the present disclosure are not limited to the foregoing technical objects, and other non-mentioned technical objects will be clearly understood by those skilled in the art from the description below.

In order to solve the foregoing object, there is provided a method of providing a user interface for a game in a user terminal, the method including: receiving a selection input for a first item among a plurality of items existing in a game map from a user; and changing a location of at least a part of one or more second items so that at least the part of the one or more second items corresponding to the first item is displayed to be adjacent to the first item at least based on the reception of the selection input.

The game map may include a grid consisting of one or more tiles.

The changing of the location of at least the part of the one or more second items may include automatically changing the location of at least the part of the one or more second items to locations corresponding to second tiles that are usable tiles among the most adjacent tiles to a first tile corresponding to the first item among the one or more tiles, respectively.

The usable tiles may include tiles in which items are not displayed at locations corresponding to one or more tiles among the one or more tiles.

The changing of the location of at least the part of the one or more second items may include, when the number of one or more second items is smaller than a preset threshold, automatically changing the locations of all of the one or more second items so that all of the one or more second items are displayed to be adjacent to the first item.

The changing of the location of at least the part of the one or more second items may include, when the number of one or more second items is larger than a preset threshold, automatically changing the locations of the items in the number corresponding to the threshold among the one or more second items so that the items in the number corresponding to the threshold among the one or more second items are displayed to be adjacent to the first item.

The method may further include displaying a preset effect on each of the one or more second items in response to the reception of the selection input.

The changing of the location of at least the part of the one or more second items so that at least the part of the one or more second items corresponding to the first item is displayed to be adjacent to the first item at least based on the reception of the selection input may include: allowing a reception of a use input from the user so that at least the part of the one or more second items is displayed to be adjacent to the first item based on the selection input and a preset condition; and when the use input is received, automatically changing the location of at least the part of the one or more second items so that at least the part of the one or more second items is displayed to be adjacent to the first item.

The preset condition may include at least one of a condition for a game play of the user and a condition for an item attribute of the first item.

The condition for the game play of the user may include a condition for a cumulative time that the user has played the game at least.

The condition for the item attribute of the first item may include at least one of a condition for a size of the first item and a condition for a movement attribute of the first item.

Each of the plurality of items may receive a movement input from the user, and the item receiving the movement input may be displayed while a location of the item is changed according to the attribute of the movement input, or may be merged with at least one item corresponding to the item receiving the movement input among the plurality of items.

In order to solve the foregoing object, there is provided a computer program stored in a computer readable storage medium, in which the computer program includes commands to perform operations below when is executed by one or more processors of a computing device, the operations including: receiving a selection input for a first item among a plurality of items existing in a game map from a user; and changing a location of at least a part of one or more second items so that at least the part of the one or more second items corresponding to the first item is displayed to be adjacent to the first item at least based on the reception of the selection input.

In order to solve the foregoing object, there is provided a user terminal, including: an output unit configured to display a game map in which a plurality of items exists; and a user input unit configured to receive a selection input for a first item among the plurality of items existing in the game map; and a processor configured to change a location of at least a part of one or more second items so that at least the part of the one or more second items corresponding to the first item is displayed to be adjacent to the first item at least based on the reception of the selection input.

The technical solutions obtainable from the present disclosure are not limited to the foregoing solutions, and other non-mentioned solution means will be clearly understood by those skilled in the art from the description below.

According to several exemplary embodiments of the present disclosure, it is possible to provide a user interface for a game.

The effects of the present disclosure are not limited to the foregoing effects, and other non-mentioned effects will be clearly understood by those skilled in the art from the description below.

### BRIEF DESCRIPTION OF THE DRAWINGS

Various aspects are described with reference to the drawings, and herein, like reference numerals are generally used to designate like constituent elements. In the exemplary embodiment below, for the purpose of description, a plurality of specific and detailed matters is suggested in order to provide general understanding of one or more aspects. However, it is apparent that the aspect(s) may be carried out without the specific and detailed matters.
FIG. 1 is a block diagram illustrating a computing device providing a user interface according to several exemplary embodiments of the present disclosure.
FIG. 2 is a diagram illustrating an example of a user interface according to several exemplary embodiments of the present disclosure.
FIG. 3 is a diagram illustrating an example of a user interface according to several exemplary embodiments of the present disclosure.
FIG. 4 is a diagram illustrating an example of an effect of the user interface according to several exemplary embodiments of the present disclosure.
FIG. 5 is a diagram illustrating an example of a use input of the user interface according to several exemplary embodiments of the present disclosure.
FIG. 6 is a diagram illustrating an example of a movement input of the user interface according to several exemplary embodiments of the present disclosure.
FIG. 7 is a diagram illustrating an example of a movement input of the user interface according to several exemplary embodiments of the present disclosure.
FIG. 8 is a flowchart for providing a user interface according to several exemplary embodiments of the present disclosure.
FIG. 9 is a simple and general schematic diagram illustrating an example of a computing environment in which exemplary embodiments of the present disclosure are implementable.

### DETAILED DESCRIPTION

Various exemplary embodiments are described with reference to the drawings. In the present specification, various descriptions are presented for understanding the present disclosure. However, it is clear that the exemplary embodiments may be implemented even without a specific description.

Terms, "component", "module", "system", and the like used in the present specification indicate a computer-related entity, hardware, firmware, software, a combination of software and hardware, or execution of software. For example, a component may be a procedure executed in a processor, a processor, an object, an execution thread, a program, and/or a computer, but is not limited thereto. For example, both an application executed in a computing device and a computing device may be components. One or more components may reside within a processor and/or an execution thread. One component may be localized within one computer. One component may be distributed between two or more computers. Further, the components may be executed by various computer readable media having various data structures stored therein. For example, components may communicate through local and/or remote processing according to a signal (for example, data transmitted to another system through a network, such as the Internet, through data and/or a signal from one component interacting with another component in a local system and a distributed system) having one or more data packets.

A term "or" intends to mean comprehensive "or" not exclusive "or". That is, unless otherwise specified or when it is unclear in context, "X uses A or B" intends to mean one of the natural comprehensive substitutions. That is, when X uses A, X uses B, or X uses both A and B, "X uses A or B" may be applied to any one among the cases. Further, a term "and/or" used in the present specification shall be understood to designate and include all of the possible combinations of one or more items among the listed relevant items.

It should be understood that a term "include" and/or "including" means that a corresponding characteristic and/or a constituent element exists. Further, a term "include" and/or "including" means that a corresponding characteristic and/or a constituent element exists, but it shall be understood that the existence or an addition of one or more other characteristics, constituent elements, and/or a group thereof is not excluded. Further, unless otherwise specified or when it is unclear that a single form is indicated in context, the singular shall be construed to generally mean "one or more" in the present specification and the claims.

"Equal to or more" and/or "less than" may be interpreted as "larger than" and/or "equal to or less than" and vice versa.

Those skilled in the art shall recognize that the various illustrative logical blocks, configurations, modules, circuits, means, logic, and algorithm operations described in relation to the exemplary embodiments additionally disclosed herein may be implemented by electronic hardware, computer software, or in a combination of electronic hardware and computer software. In order to clearly exemplify interchangeability of hardware and software, the various illustrative components, blocks, configurations, means, logic, modules, circuits, and operations have been generally described above in the functional aspects thereof. Whether the functionality is implemented as hardware or software depends on a specific application or design restraints given to the general system. Those skilled in the art may implement the functionality described by various methods for each of the specific applications. However, it shall not be construed that the determinations of the implementation deviate from the range of the contents of the present disclosure.

The description about the presented exemplary embodiments is provided so as for those skilled in the art to use or carry out the present disclosure. Various modifications of the exemplary embodiments will be apparent to those skilled in the art. General principles defined herein may be applied to other exemplary embodiments without departing from the scope of the present disclosure. Therefore, the present disclosure is not limited to the exemplary embodiments presented herein. The present disclosure shall be interpreted within the broadest meaning range consistent to the principles and new characteristics presented herein.

In the present disclosure, a network function, an artificial neural network, and a neural network may be interchangeably used.

In the contents of the present disclosure, a term "item" may refer to a character that is used in the game on behalf of a user, or an object that can be used by a user and is helpful to progress the game when is used, that is, the term "item" may be used as a term meaning all of the data that is generally understood when referring to an item in a game. The item may include items of various attributes, such as a color, a size, a form, a function, an effect, a price/value in a game, and mobility.

In the contents of the present disclosure, a term "tile" may be used as a term referring to each of figures having predetermined shapes that fill an area having a predetermined size without gaps or overlapping parts. The shape of the figure usable as a tile is very various, and may be a polygonal shape, such as an equilateral triangle, square, regular hexagon, rhombus, rectangle, and trapezoid, or an atypical figure in a curved shape. In the contents of the present disclosure, particularly, a "tile" configures a game map that is a background of a game, and may be used as a unit of a size and/or a unit of movement of each of a plurality of items that may exist in the game map.

In the contents of the present disclosure, a term "adjacent" may be used as a term that means a state where a distance between at least two objects is recognizable to be close to a user, or a state where a distance between at least two objects is as close as possible according to a preset rule. For example, there are a first object located at a right center of a screen and a second object located at a left and lower-most end of the screen, and when the second object moves from the right center of the screen to a location that is slightly skewed to the left, a user may recognize that a distance between the second object and the first object is further decreased. Otherwise, when a preset rule sets the case where a "straight distance" between two objects is relatively short as being adjacent, or a preset rule sets the case where "the number of tiles" between two objects is relatively small as being adjacent, the case where the "straight distance" between the two objects is decreased or "the number of tiles" between the two objects is decreased may be considered as the state where the two objects are adjacent according to the contents of the preset rule. The foregoing example is merely an example, and the present disclosure is not limited thereto.

In the contents of the present disclosure, a term "effect" may be a method of visually emphasizing a predetermined object within a user interface. A predetermined available method may be used for visually emphasizing an object. For example, a display of an effect for an object may include displaying an animation while being adjacent to the object, highlighting the object in a predetermined color, a giving a motion to the object itself, changing the object itself to a different color, or making the object be flashed. The method of visually emphasizing the object may be preset so that the object is different depending on an attribute of the object. In the meantime, the effect may also be provided in combination with other stimuli (auditory, smell, vibration, and the like) in addition to the visual emphasis.

In the contents of the present disclosure, a term "selection input" may be used as a term meaning an input of a user for selecting a predetermined object within a user interface. For example, a user may input a selection input for a corresponding object by clicking a predetermined object (for example, an item). In the meantime, when the selection input is received, a new object may be displayed or an attribute of the object may be displayed on the user interface in response to the selection input. For example, when a user inputs a selection input for a predetermined item, information about the selected item may be further displayed on the user interface, and/or a button object related to a usable function for the selected item may be changed to an activation state so as to receive a use input for the corresponding function and displayed.

In the contents of the present disclosure, a term "movement input" may be used as a term meaning an input of a user for moving a location of a predetermined object within a user interface. For example, a user may drag a predetermined object (for example, an item) in a clicking state and input a movement input for the corresponding object. However, the present disclosure is not limited thereto, and the movement input may be input in various forms, such as wheel scroll of a mouse and a directional key of a keyboard. In the meantime, when the movement input is received, the location of the object for which the movement input is received in the user interface is changed according to the received movement input and displayed.

In the contents of the present disclosure, a term "merge" may refer to a term indicating a merge game that is one kind of puzzle game. The merge game may be a game in which a user mainly synthesizes (that is, merges) two or more items and creates a new item. In the contents of the present disclosure, the term "merge" may also be used as a term meaning the operation of synthesizing two or more items as described above, and/or an operation itself of synthesizing two or more items and creating a new item.

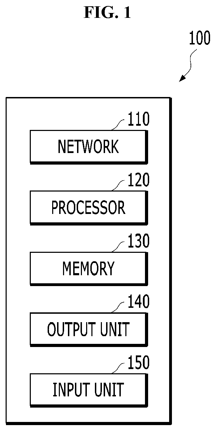

FIG. 1 is a block diagram illustrating a computing device providing a user interface according to an exemplary embodiment of the present disclosure.

The configuration of a computing device 100 illustrated in FIG. 1 is merely a simplified example. In the exemplary embodiment of the present disclosure, the computing device 100 may include other configurations for performing a computing environment of the computing device 100, and only some of the disclosed configurations may also configure the computing device 100.

The computing device 100 according to the exemplary embodiment of the present disclosure may include a network unit 110, a processor 120, a memory 130, an output unit 140, and an input unit 150.

The computing device 100 according to the exemplary embodiments of the present disclosure may include a Personal Computer (PC), a notebook computer, a mobile terminal, a smart phone, a tablet PC, and the like, and may include all kinds of terminals which are capable of accessing a wired/wireless network.

The network unit 110 according to the exemplary embodiments of the present disclosure may use a predetermined form of wire or wireless communication systems.

The network unit 110 in the present disclosure may be configured regardless of its communication mode, such as a wired mode and a wireless mode, and may be configured of various communication networks, such as a Personal Area Network (PAN) and a Wide Area Network (WAN). Further, the network may be the publicly known World Wide Web (WWW), and may also use a wireless transmission technology used in PAN, such as Infrared Data Association (IrDA) or Bluetooth.

The technologies described in the present specification may be used in other networks, as well as the foregoing networks.

The processor 120 according to the exemplary embodiment of the present disclosure may consist of one or more cores, and may include a processor, such as a Central Processing Unit (CPU), a General Purpose Graphics Processing Unit (GPGPU), and a Tensor Processing Unit (TPU) of the computing device, for analyzing data, deep learning, and/or providing a user interface. The processor 120 may read a computer program stored in the memory 130 and perform data processing for machine learning and/or provide a user interface according to the exemplary embodiment of the present disclosure. According to the exemplary embodiment of the present disclosure, the processor 120 may perform computation for training a neural network. The processor 120 may perform a calculation, such as processing of input data for training in Deep Learning (DN), extraction of a feature from input data, an error calculation, and updating of a weight of the neural network by using backpropagation, for training the neural network. At least one of the CPU, GPGPU, and TPU of the processor 120 may process training of a network function. For example, the CPU and the GPGPU may process training of the network function and data classification by using a network function together. Further, in the exemplary embodiment of the present disclosure, the training of the network function and the data classification by using a network function may be processed by using the processors of the plurality of computing devices together. Further, the computer program executed in the computing device according to the exemplary embodiment of the present disclosure may be a CPU, GPGPU, or TPU executable program.

The memory 130 according to the exemplary embodiment of the present disclosure may store the predetermined form of information generated or determined by the processor 120 and the predetermined form of information received by the network unit 110.

According to the exemplary embodiment of the present disclosure, the memory 130 may include at least one type of storage medium among a flash memory type, a hard disk type, a multimedia card micro type, a card type of memory (for example, an SD or XD memory), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, and an optical disk. The computing device 100 may also be operated in relation to web storage performing a storage function of the memory 130 on the Internet. The description of the foregoing memory is merely illustrative, and the present disclosure is not limited thereto.

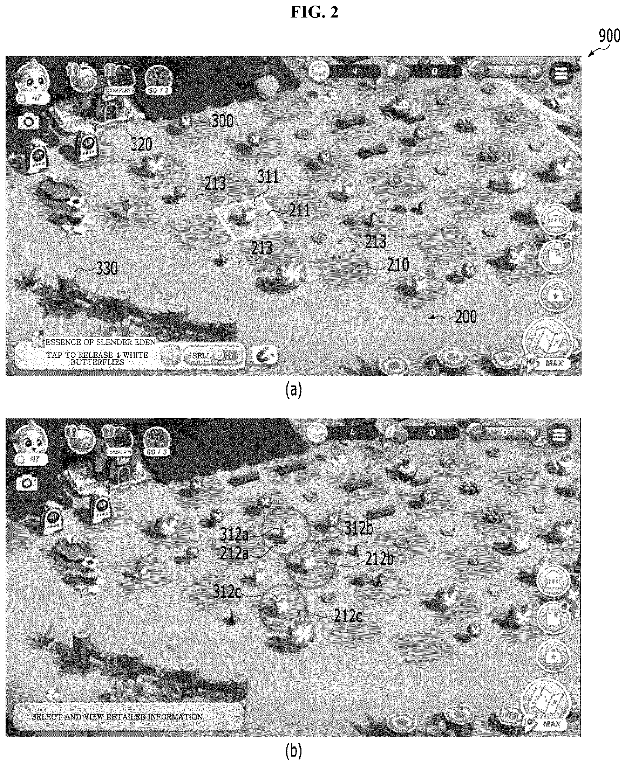

The output unit 140 according to the exemplary embodiment of the present disclosure may display a user interface according to the exemplary embodiment of the present disclosure. The output unit 140 may display the user interface illustrated in FIGS. 2 to 7. The user interfaces which will be illustrated and described below are merely examples, and the present disclosure is not limited thereto.

The output unit 140 according to the exemplary embodiment of the present disclosure may output the predetermined form of information generated or determined by the processor 120 and the predetermined form of information received by the network unit 110.

In the exemplary embodiment of the present disclosure, the output unit 140 may include at least one of a Liquid Crystal Display (LCD), a Thin Film Transistor Liquid Crystal Display (TFT LCD), an Organic Light Emitting Diode (OLED), a flexible display, and a 3D display. Some display modules among them may be formed of a transparent or light transmissive type so that the outside may be viewed through the display modules. This may be referred to as a transparent display module, and a representative example of the transparent display module includes a Transparent OLED (TOLED).

A user input may be received through the input unit 150 according to the exemplary embodiment of the present disclosure. The input unit 150 according to the exemplary embodiment of the present disclosure may be provided with keys and/or buttons for receiving a user input. The computer program for providing the user interface according to the exemplary embodiment of the present disclosure may be executed according to a user input through the input unit 150.

The input unit 150 according to the exemplary embodiments of the present disclosure may receive a signal by detecting a button manipulation or a touch input of a user or receive a voice or an operation of a user and the like through a camera or a microphone and convert the received signal, voice, or operation to an input signal. To this end, speech recognition technology or motion recognition technology may be used.

The input unit 150 according to the exemplary embodiments of the present disclosure may also be implemented as external input equipment connected with the computing device 100. For example, the input equipment may be at least one of a touch pad, a touch pen, a keyboard, and a mouse for receiving a user input, but this is merely an example, and the present disclosure is not limited thereto.

The input unit 150 according to the exemplary embodiments of the present disclosure may recognize a touch input of a user. The input unit 150 according to the exemplary embodiments of the present disclosure may have the same configuration as that of the output unit 140. The input unit 150 may be formed of a touch screen implemented so as to receive a selection input of a user. In the touch screen, any one of a contact type capacitance method, an infrared light sensing method, a Surface Ultrasonic Wave (SAW) method, a piezoelectric method, and a resistive film method may be used. The detailed description for the foregoing touch screen is merely illustrative according to the exemplary embodiments of the present disclosure, and various touch screen panels may be applied to the computing device 100. The input unit 150 formed of a touch screen may include a touch sensor. The touch sensor may be configured to convert a change in pressure applied to a specific region of the input unit 150 or electrostatic capacity generated in a specific region of the input unit 150 into an electric input signal. The touch sensor may be configured so as to detect pressure of a touch, as well as a location and an area of a touch. When a touch input is made to the touch sensor, a signal(s) corresponding to the touch input is transmitted to a touch controller. The touch controller processes the signal(s) and then transmits data corresponding to the signal(s) to the processor 120. Accordingly, the processor 120 may recognize a touched area of the input unit 150 and the like.

In the exemplary embodiment of the present disclosure, the server may also include other configurations for performing a server environment. The server may include all of the predetermined types of devices. The server is a digital device, and may be a digital device, such as a laptop computer, a notebook computer, a desk top computer, a web pad, a mobile phone, which is equipped with a processor, includes a memory, and has computing capability.

The server (not illustrated) performing the operation for providing the user interface for a game according to the exemplary embodiment of the present disclosure to the user terminal may include a network unit, a processor, and a memory.

The server may generate the user interface according to the exemplary embodiments of the present disclosure. The server may transmit the generated user interface to the user terminal. Otherwise, the server may be a computing system which provides information that makes the user terminal generate the user interface according to the exemplary embodiments of the present disclosure to the user terminal through a network. In this case, the user terminal may be a predetermined form of computing device 100 which is capable of accessing the server. The processor of the server may transmit the user interface to the user terminal through the network unit. Otherwise, the processor of the server may transmit information for making the user terminal generate the user interface to the user terminal through the network unit.

The server according to the exemplary embodiments of the present disclosure may be, for example, a cloud server. The server may be a web server processing the service. The kind of foregoing server is merely an example, and the present disclosure is not limited thereto.

Each of the network unit, the processor, and the memory included in the server according to the exemplary embodiments of the present disclosure may perform the same roles as those of the network unit 110, the processor 120, and the memory 130 included in the computing device 100 or be identically configured to the network unit 110, the processor 120, and the memory 130 included in the computing device 100.

In the exemplary embodiments of the present disclosure, the areas may be spaces displayed on the user interface and not-overlapping on a screen. Otherwise, two or more areas may also be displayed while overlapping. In the case where two or more areas are displayed while overlapping, one area may be hidden by another area and not be viewed. Otherwise, in the case where two or more areas are displayed while overlapping and an upper area is partially semi-transparently displayed, at least a part of a lower area may be viewed. Two or more areas may have the same size. Further, two or more areas may also have the different sizes. One area may also include only one area, or may also include a plurality of sub areas. One area may include one or more display objects.

In the exemplary embodiments of the present disclosure, the object may be a set of a picture, a symbol, or a character corresponding to each of a program, a command, and data. According to the exemplary embodiments of the present disclosure, the object may be used for receiving a user selection input. For example, when a user input for an object is received, the processor 120 may execute a command or data stored in correspondence to the corresponding object and display the command or the data in the user interface. In the exemplary embodiments of the present disclosure, the object and the display object may be interpreted as the same meaning.

In the exemplary embodiments of the present disclosure, "display" may be an operation for displaying data to the user through the output unit 140. "display" and "display" may be interchangeably used.

Hereinafter, a method of providing a user interface for a game according to the exemplary embodiments of the present disclosure will be described.

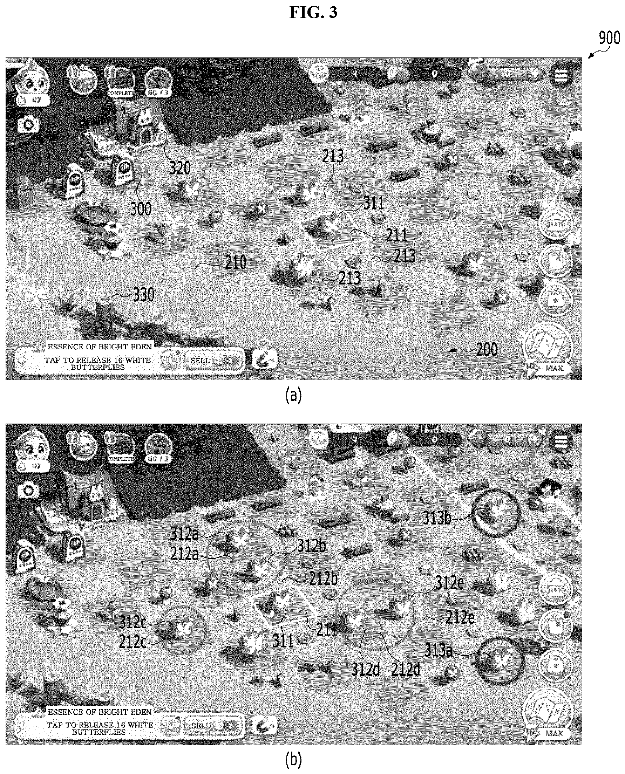

FIGS. 2 and 3 are diagrams illustrating an example of a user interface according to several exemplary embodiments of the present disclosure.

A method of providing a user interface for a game in a user terminal according to the exemplary embodiments of the present disclosure may include: receiving a selection input for a first item among a plurality of items present in a game map from a user; and changing a location of at least a part of one or more second items so that at least the part of one or more second items corresponding to the first item is displayed to be adjacent to the first item at least based on the reception of the selection input. However, the foregoing constituent elements are not essential for implementing the method of providing the user interface for the game, so that the method of providing the user interface for the game may include more or less constituent elements than the foregoing listed constituent elements.

In particular, FIG. 2 illustrates an example of changing locations of all of the second items so that all of the second items are displayed to be adjacent to the first item based on the selection input for the first item, and FIG. 3 illustrates an example of changing locations of only a part of the second items so that the part of the second items are displayed to be adjacent to the first item based on the selection input for the first item.

Particularly, (a) of FIG. 2 and (a) of FIG. 3 illustrate the examples of the user interface before the locations of at least a part of one or more second items are changed, and (b) of FIG. 2 and (b) of FIG. 3 illustrate the examples of the user interface after the locations of at least a part of one or more second items are changed so that at least the part of one or more second items is displayed to be adjacent to the first item in (a) of FIG. 2 and (a) of FIG. 3, respectively.

First, referring to (a) of FIG. 2, a user interface 900 may include a game map 200 that is a background of a game, and a plurality of items 300 present in the game map 200. In this case, the user may perform a selection input for a first item 311 among the plurality of items 300.

In the several exemplary embodiments of the present disclosure, the game map 200 may include a grid consisting of one or more tiles 210.

One or more tiles 210 according to the several exemplary embodiments of the present disclosure may be used as a unit of a size of each of the items and/or a unit of a movement of each of the items 300 in the relationship between the plurality of items 300.

For example, in the case of an item (for example, the item 311) having a 1 × 1 size among the plurality of items 300 illustrated in (a) of FIG. 2, one item may be displayed so as to correspond to one tile, or in the case of an item (for example, the item 320) having a 2 × 1 size, one item may be displayed so as to correspond to two tiles. However, the present disclosure is not limited thereto, and there may be items (for example, the item 330) that do not have a size in the unit of the tile.

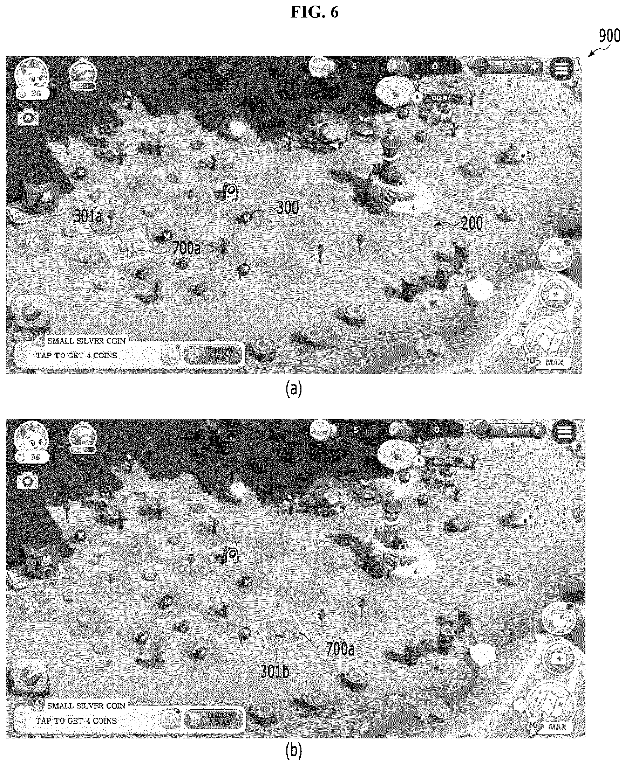

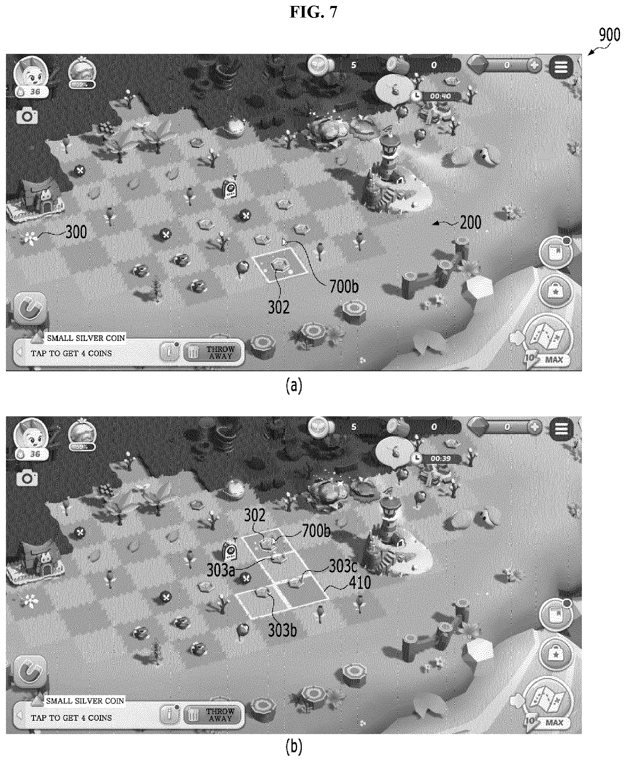

Each of the plurality of items 300 may be moved on the game map by using one tile as a minimum unit. For example, the item having the size of 1 × 1 described above may be moved to be always displayed in correspondence with one tile. That is, the item having the size of 1 × 1 may not be displayed so as to correspond to two tiles while being located at a boundary between the tiles. Otherwise, for another example, the item having the size of 2 × 1 may be moved so as to always correspond to two tiles and be displayed, and the item having the size of 2 × 1 may not be displayed so as to correspond to four or six tiles while being located at a boundary between the tiles. However, the present disclosure is not limited thereto, and there may also be the item movable by a predetermined distance regardless of the tile or the immovable item (for example, the item 330). The movement input of the user for the items will be described below with reference to FIGS. 6 and 7.

One or more tiles 210 according to several exemplary embodiments of the present disclosure may or may not be usable depending on whether an item is displayed at a location corresponding to each of the tiles.

For example, the tile, on which the item is not displayed, among one or more tiles 210 illustrated in (a) of FIG. 2 may be the usable tile, and the item, which has been displayed at another location, may be moved to the usable tile, and a generated item may also be newly located in the usable tile.

In the meantime, the tiles 213 on which the items are displayed among one or more tiles 210 may be the unusable tiles. The item, which has been displayed at another location, may not be moved to the unusable tile, and the generated item may not also be newly located in the unusable tile. However, the present disclosure is not limited thereto, and for example, according to the rules of the game, the items displayed on the unusable tiles may be automatically removed or pushed back while the item, which has been displayed at another location, is moved to the unusable tile.

In the several exemplary embodiments of the present disclosure, the plurality of items 300 may include items having various items attribute values. The item attribute may include a name, a color, a size, a form, a function, a quest, an effect, a price/value in the game, whether the item is movable, and the like of the item. For example, the item 311 of (a) of FIG. 2 may be a 1 × 1 movable item having a green color and a hexagonal shape, and in contrast, the item 330 may be the immovable item having a fence shape and not having a size in the unit of the tile.

In the meantime, the items of the corresponding type may have the corresponding item attribute values. For example, the items (the items 312 of (b) of FIG. 2) having the same appearance as that of the item 311 illustrated in (a) of FIG. 2 are the same type of items, and may have the same item attribute value. Further, according to a predetermined rule of the game, the items of the corresponding types may be merged, and the items of the not-corresponding types may not be merged. However, the present disclosure is not limited thereto.

In the several exemplary embodiments of the present disclosure, the selection input for the first item 311 may be input as the selection for the first item 311 that is any one of the plurality of items 300, and/or the selection for the first tile 211 in which the first item 311 is located. For example, the selection input for the first item 311 may be input by clicking the first item 311, and/or clicking the first tile 211 in which the first item 311 is located. However, the present disclosure is not limited thereto.

In the meantime, in response to the selection input for the first item 311, a new object for the first item 311 may be further displayed on the user interface 900, or the first item 311 for which the selection input is received may be at least partially changed and displayed.

For example, referring to (a) of FIG. 2, according to the selection of the first item 311, a name of the first item 311 and an explanation for a quest (for example, "Essence of Slender Eden, tap to release 4 white butterflies"), and an item (for example, a magnet-shaped item) related to a function performable in relation to the first item 311 may be additionally displayed at a left-lower end. Further, according to the selection of the first item 311, a boundary and a shade with a different color from the colors of other tiles may be highlighted in the first tile 211 corresponding to the first item 311. Comparing with (b) of FIG. 2 in which the selection for the first item 311 is released, it can be seen that the configurations, that is, the explanation, the function icon, and the highlight of the corresponding first tile for the first item 311, described in (b) of FIG. 2 are not displayed.

The game map 200, the tiles 210 configuring the game map, and the item 300 existing in the game map may be variously set in predetermined forms, and the forms of the game map 200, the tiles 210, and the items 300 exemplified in FIGS. 2 to 7 of the present disclosure do not limit the present disclosure.

Next, referring to (b) of FIG. 2, at least based on the reception of the selection input for the first item 311, the location of at least a part 312 among one or more second items may be changed so that at least a part 312a, 312b, and 312c (312) among one or more second items corresponding to the first item 311 is displayed to be adjacent to the first item 311 on the user interface 900.

In particular, (b) of FIG. 2 illustrates the example in which three second items 312 corresponding to the first item 311 are present on the game map, and the locations of all of the three second items 312 are changed so that all of the three second items 312 are displayed to be adjacent to the first item 311 based on the selection input for the first item 311 illustrated in (a) of FIG. 2. However, the present disclosure is not limited thereto, and the location of only a part of the second items may be changed, and this will be described below with reference to FIG. 3.

In the meantime, in the aspect of the tiles, the change of the location of at least the part 312 among one or more second items so that at least the part 312 among the one or more second items is displayed to be adjacent to the first item may be the change of the location of at least the part 312 among the second items to the location corresponding to each of the usable tiles (hereinafter, the "second tiles" 212a, 212b, and 212c (212)) among the tiles most adjacent to the first tile 211 corresponding to the first item 311.

That is, the location of at least the part 312 among the second items is changed to correspond to the location of each of the usable tiles that are closest to the first tile 211 corresponding to the first item 311 for which the selection input is received (for example, the tiles of which sides are in contact with the first tile 211), and when the number of tiles that are closest to the first tile 211 and usable is smaller than the number of at least the part 312 of the second items, the location of at least the part 312 among the second items may be changed to sequentially correspond to positions of the tiles that are close to the first tile 211 in a next priority (for example, the tiles of which vertices are in contact with the first tile 211 in a diagonal direction) and usable.

In the meantime, whether the tile is closest to the first tile 211 or is close to the first tile in the subordinate order may be determined by, for example, comparing the center distance between the first tile 211 and adjacent tiles. For example, the tile closest to the first tile 211 may be the tile of which the side is in contact with the first tile 211, and the tile close to the first tile 211 in the subordinate order may be the tile of which the vertex is in contact with the first tile 211 in the diagonal direction, and the tile close to the first tile 211 in the next subordinate order may be the tile of which the side is in contact with the tile of which the side is in contact with the first tile 211 (excluding the tiles in the diagonal direction of the first tile 211, that is, the tiles close to the first tile 211 in the subordinate order). However, the present disclosure is not limited thereto, and in the case where there is the predetermined game rule for calculating the adjacent degree between the tiles, it is determined the tiles adjacent to the first tile 211 based on the corresponding rule, and the locations of the second items may be automatically changed so as to be displayed to be adjacent to the first item.

As described above, when the user selects a predetermined item ("the first item" in the present disclosure), the items corresponding to the corresponding item are automatically collected in adjacent locations, so that it is possible to arouse user interest by presenting differentiation from existing games, and particularly, in a merge game where merging the same items is the main action, it is possible to satisfy the needs of users who want to easily find the same items.

Next, referring to FIG. 3, (a) of FIG. 3 illustrates an example of a selection input for the first item 311 in which more than 5 corresponding second items exist on the game map, and (b) of FIG. 3 illustrates an example in which the locations of only the five second items 312 are changed so that the 5 second items 312a, 312b, 312c, 312d, and 312e (312) that are the parts of the second items are displayed to be adjacent to the first item 311 based on the selection input illustrated in (a) of FIG. 3, and the locations of the remaining second items 313a and 313b (313) are not changed. This contrasts with FIG. 2 which illustrates the example in which the locations of all of the second items are changed so that all of the second items existing on the game map are displayed while being adjacent to the first item.

As described above, when it is determined that only the part 312 of the second items corresponding to the selected first item 311 is displayed to be adjacent to the first item 311, the number of second items to be displayed to be adjacent to the first item (hereinafter, a "threshold") may be arbitrarily set by a game developer and/or a user in advance.

That is, when the number of second items corresponding to the first item for which the selection input is received is smaller than the threshold on the game map, the locations of all of the second items may be automatically changed so that all of the second items existing on the game map are displayed to be adjacent to the first item. Otherwise, when the number of second items is larger than the threshold on the game map, the locations of only the number of second items corresponding to the threshold may be automatically changed so that the number of second items corresponding to the threshold among the second items existing on the game map is displayed to be adjacent to the first item.

For example, FIGS. 2 and 3 illustrate the examples in which the threshold is set to 5. That is, in FIG. 2, the second items 312 corresponding to the selected first item 311 exist on the game map 200 in the number (that is, 3) less than the threshold (in this case, 5), so that locations of all of the second items 312 are changed so that all of the second items 312 are displayed to be adjacent to the first item 311 (see (b) of FIG. 2). In contrast, in FIG. 3, the second items 312 and 313 corresponding to the selected first item 311 exist on the game map 200 in the number (that is, 7) larger than the threshold (in this case, 5), so that the locations of only the number of second items corresponding to the threshold value, that is, the five second items 212, are changed so that the five second items 212 are displayed to be adjacent to the first item 311, and the location of the remaining second items 313 are not changed (see (b) of FIG. 3).

As described above, by setting the threshold for the number of second items, of which the locations are to be changed so that the second items are displayed to be adjacent to the first item based on the selection input, it is possible to satisfy the needs of users who want to collect the same resource, and simultaneously it is possible to avoid excessively disturbing the arrangement of the items generated by the user and the game map and prevent excessive load on the game.

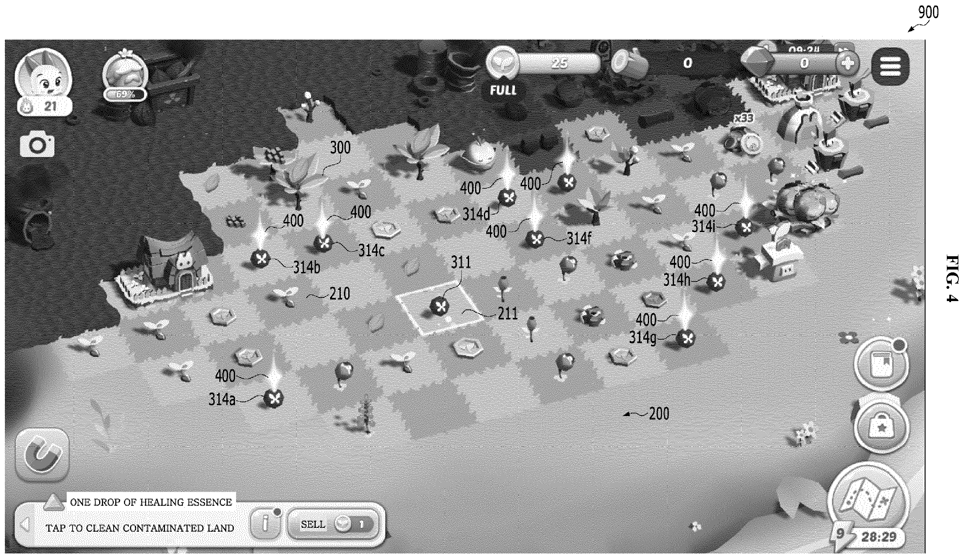

FIG. 4 is a diagram illustrating an example of an effect of the user interface according to several exemplary embodiments of the present disclosure.

The method of providing the user interface for the game in the user terminal according to several exemplary embodiments of the present disclosure may further include displaying a predetermined effect in each of one or more second items corresponding to the first item in response to the selection input of the user for the first item. However, the foregoing constituent elements are not essential for implementing the method of providing the user interface for the game, so that the method of providing the user interface for the game may include more or less constituent elements than the foregoing listed constituent elements.

Referring to FIG. 4, in response to the selection input of the user for the first item 311, an effect 400 may be displayed in each of the second items 314a, 314b, 314c, 314d, 314e, 314f, 314g, 314h, and 314i (314) corresponding to the first item 311 among the plurality of items existing on the game map.

FIG. 4 illustrates the example in which the effect 400 is displayed in a rhombus shape at an upper end of each of the second items 314, but the present disclosure is not limited thereto. For example, the effect 400 may be in the form of an arbitrary figure other than a rhombus, or may be in the form of a dynamic figure (that is, a figure having an animation effect), and may be a color or shadow other than a figure. Otherwise, the effect 400 may be giving a motion to each of the second items 314 or temporarily changing a color of each of the second items 314, in addition to displaying an additional object to the location (for example, the upper end of each of the second items) indicating each of the second items 314. Otherwise, the effect 400 may also be provided in combination with the foregoing visual stimulus and other stimuli (auditory, smell, and vibration).

In the meantime, the effect 400 may be differently set according to an attribute of an item, or may also be identically set regardless of the attribute of the item. For example, the effect of displaying the rhombus figure is preset for the items of a first type, and the effect of motion in which the items are rotated in place may also be preset for the items of a second type. Otherwise, for all of the items of the first type and the items of the second type, the effect of displaying the rhombus figure may be preset.

FIG. 4 illustrates the example in which the effect 400 is displayed for all of the displayed second items 314, but is not displayed for the first item 311, but the present disclosure is not limited thereto. For example, the effect 400 may also be displayed only for a part of the displayed second items 314. For example, the effect may also be displayed only for the preset number of second items in an order close to the first item. In the meantime, the effect may also be displayed for the first item 311 for which the selection input is received, as well as the second items 314. The foregoing example is merely an example, and the present disclosure is not limited thereto.

As described above, by displaying the effect on the same items as the item selected by the user, the user is capable of easily recognizing a desired item among the large number of various items distributed in the game map, and particularly, in the merge game where merging the same items is the main action, it is possible to satisfy the needs of users who want to easily find the same items.

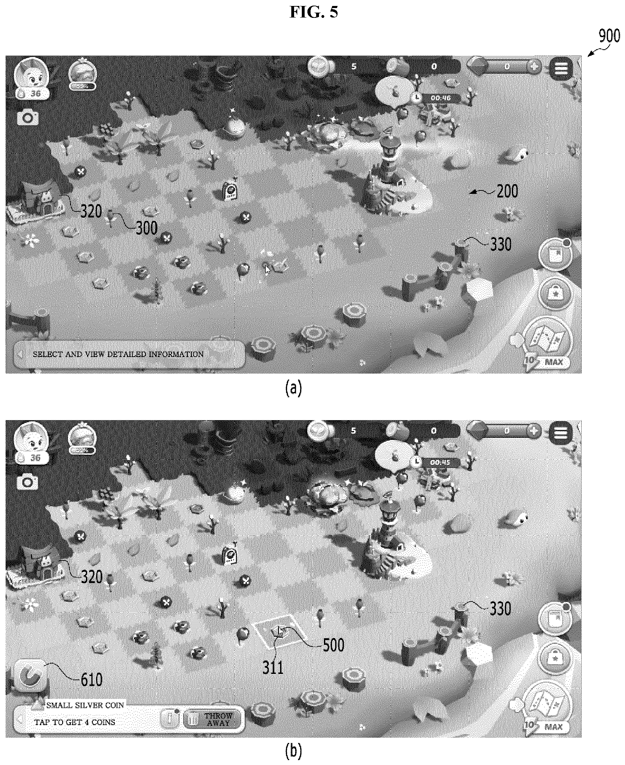

FIG. 5 is a diagram illustrating an example of a use input of the user interface according to several exemplary embodiments of the present disclosure.

A method of providing a user interface for a game in a user terminal according to several exemplary embodiments of the present disclosure may include: allowing a reception of a use input for displaying at least a part of one or more second items to be adjacent to a first item based on a selection input and a predetermined condition; and automatically changing a location of at least the part of the one or more second items so that at least the part of the one or more second items is displayed to be adjacent to the first item when the user input is received. However, the foregoing constituent elements are not essential for implementing the method of providing the user interface for the game, so that the method of providing the user interface for the game may include more or less constituent elements than the foregoing listed constituent elements.

FIG. 5 illustrates an example in which a function button 610 which is capable of receiving a use input for displaying at least a part of the second items to be adjacent to the first item is displayed (see (b) of FIG. 5) or is not displayed (see (a) of FIG. 5) at least based on whether a selection input 500 for the first item 311 is received.

In particular, referring to (a) of FIG. 5, no item on the game map is selected as the first item, so that the items to be displayed to be adjacent to each other are not specified, and accordingly, it can be seen that the function button 610 capable of receiving a use input is not displayed. However, the present disclosure is not limited thereto, and the function button 610 may be displayed in the user interface 900 even in the state where no item on the game map receives a selection input, but the function button 610 may be displayed in an inactivated state (for example, a black-white state) so that the user is capable of recognizing that it is impossible to receive the use input.

In the meantime, referring to (b) of FIG. 5, it can be seen that in response to the input of the selection input 500 for the first item 311, the function button 610 capable of receiving the use input is displayed at the left-lower end of the user interface 900. However, the present disclosure is not limited thereto, the function button 610 capable of receiving the use input may be displayed in vicinity of the first item 311 for which the selection input 500 is received, and for example, in response to the reception of the selection input, the function button 610 may also be rendered near the first item 311 in the form of a pop-up button.

In the meantime, whether to display (activate) the function button 610 capable of receiving the use input may be determined according to a preset condition, in addition to whether the selection input 500 is received. That is, based on the selection input and the preset condition, it is possible to determine whether to allow the reception of the use input of the user on the user interface 900.

The preset condition may include at least one of a condition for a game play of a user and a condition for the item attribute of the first item 311 for which the selection input 500 is received.

The condition for the game play of the user may include at least a condition for a cumulative time that the user has played the game. In particular, in the case where the user first starts the game, it may not be allowed that the locations of the second items corresponding to the first item are automatically changed so as to be displayed adjacent to the first item by inputting the use input, that is, selecting the first item, by the user. That is, in case of new users of the game, even though the new users select the first item 311 on the game map, the function button 610 capable of receiving the use input illustrated in (b) of FIG. 5 may not be displayed on the user interface 900. In the meantime, in the case where the user plays the game for a predetermined time or longer, the reception of the use input may be allowed when the user selects the first item 311.

The condition for the game play of the user may also include a condition for a game level of a user, a condition for whether the user possesses a specific item, and the like. For example, only in the case where the user possesses a specific item that triggers a function for displaying the second items to be adjacent to the first item, the reception of the use input of the user may be allowed in response to the user's selection of the first item 311. The foregoing examples are merely illustrative, and do not limit the present disclosure.

As described above, by determining whether to allow the reception of the use input according to the cumulative amount of time the user has played the game, it is possible to satisfy the needs of the users who want to find the same item, and at the same time, it is possible to prevent difficulty of the game from being excessively lowered and the user's interest from being lowered. Further, by providing a reward that users who have enjoyed the game for a certain content or more, that is, the users with high loyalty, are capable of more easily finding the same item, it is possible to induce users to actively play the game for a longer time.

In the meantime, the condition for the item attribute of the first item 311 may include at least one of a condition for a size of the first item and a condition for a movement attribute of the first item 311.

The condition for the size of the first item may include a condition for whether the first item has a size in the unit of the tile, a condition for whether the first item is a relatively small size item (for example, 1 × 1 size).

For example, in the case where the item 320 having a 2 × 1 size or the item 330 that does not have the size of the unit of the tile illustrated in FIG. 5 receives the selection input 500 of the user, the reception of the use input of the user may not be allowed despite of the reception of the selection input. That is, in this case, despite of the reception of the selection input, the function button 610 capable of receiving the use input of the user may not be displayed or may be maintained in the inactivation state.

As described above, whether to allow the reception of the use input is determined in consideration of the condition for the item attribute, particularly, the condition for the size of the item, so that it is possible to prevent the game map from being distracted due to the automatic change of the locations of the excessively large items, or prevent the function itself of displaying the items to be adjacent to each other from being practically meaningless due to the failure of the sufficient accommodation of the corresponding items by the tiles adjacent to the first item 311.

In the meantime, the condition for the movement attribute of the first item may include a condition for whether the item is movable.

For example, the fence type item 330 illustrated in FIG. 5 may be the item having the immovable attribute, and when the corresponding fence type item 300 receives the selection input 500 of the user, the reception of the use input of the user may not be allowed despite of the reception of the selection input. That is, in this case, despite of the reception of the selection input, the function button 610 capable of receiving the use input of the user may not be displayed or may be maintained in the inactivation state.

As described above, by variously assigning the movement attribute to the plurality of items, it is possible to diversify the number of cases for the function of displaying the items to be adjacent to be each other, and ultimately, the user's interest for the game may be further increased.

FIGS. 6 and 7 are diagrams illustrating an example of the movement input of the user interface according to several exemplary embodiments of the present disclosure.

In the method of providing the user interface for the game in the user terminal according to several exemplary embodiments of the present disclosure, each of the plurality of items may receive a movement input from the user, and the item receiving the movement input may be displayed while the location of the item is changed according to the attribute of the movement input, or may be merged with at least one another item corresponding to the item receiving the movement input among the plurality of items. In this case, the attribute of the movement input may include whether another item exists in a new location (or a new tile) to which the item receiving the movement input is to move.

In particular, FIG. 6 is a diagram illustrating an example in which the item which has received the movement input according to the movement input of the user is displayed while a location of the item is changed, and FIG. 7 is a diagram illustrating an example in which the item which has received the movement input according to the movement input of the user may be merged with other items corresponding to the corresponding item.

First, referring to FIG. 6, the user may change the location of the item 301a from an existing location (see (a) of FIG. 6) to a new location (see (b) of FIG. 6), that is, a tile at an existing location to a tile at a new location, and display the item 301a through a movement input 700a for moving the item 310a to a new location in which other items do not exist. That is, the location of each of the plurality of items existing on the game map may also be changed according to the direct input of the movement input by the user, in addition to the automatic change of the location through the selection input and the use input as described with reference to FIGS. 2 and 3.

The movement input 700a may be input in the form of, for example, clicking an item 301a and dragging and dropping the item 301a to a tile at a new location, may be input in the form of clicking the item 310a and then clicking a tile at a new location, or may be input in the form of drawing a movement trace from a tile at an existing location to a tile at a new location in the state where a touch for the item 301a is maintained on a mobile device. However, the present disclosure is not limited thereto.

In the meantime, in the case wherein the location of the item 301a is changed according to the movement input 700a, a visual display may also be provided so that the user is capable of intuitively recognizing the location to which the location of the item is to be changed on the user interface 900. For example, the tile closest to the item 301a at the current time point is emphasized in real time by using a different color and the like while the user selects and moves the item 301a, so that the user may intuitively recognize that the location of the item 301a is to be changed to the corresponding tile when the user drops the item 301a now. However, the present disclosure is not limited thereto.

Next, referring to FIG. 7, through a movement input 700b of the user for moving the item 302 to a new location in which other corresponding items exist, the user may make the item 302 be merged with other corresponding adjacent items 303a, 303b, and 303c (303).

For example, in (a) of FIG. 7, in the case where the user selects the item 302 and moves the item 302 to have a distance equal to or less than a threshold with other items 303 corresponding to each other through the movement input 700b, the items 302 and 303 may be merged with each other. In this case, the merged items 302 and 303 may generate one new item or may also give a game point to the user according to the preset rules of the game. However, the present disclosure is not limited thereto.

In the meantime, in the case where the item 302 is in a mergeable state according to the movement input 700b, the tiles corresponding to the mergeable items 302 and 303, respectively, are emphasized in real time by using different colors and the like, so that the user may intuitively recognize that the items 302 and 303 may be merged with each other when the user drops the item 302 now. The method of visually displaying that the items may be merged may include any possible method, such as giving a motion to the corresponding items, in addition to visually emphasizing and displaying the corresponding tiles.

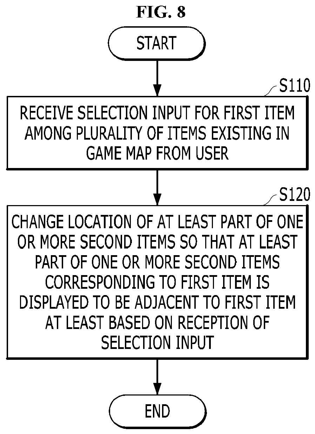

FIG. 8 is a flowchart for providing a user interface according to several exemplary embodiments of the present disclosure.

The computing device 100 may receive a selection input for a first item among a plurality of items existing in a game map from a user (operation S110).

The computing device 100 may change a location of at least a part of one or more second items so that at least the part of the one or more second items corresponding to the first item is displayed to be adjacent to the first item based on the reception of the selection input (operation S 120).

The user interface for the game according to the exemplary embodiment of the present disclosure may be implemented by logic providing a game. The logic providing the game may also be implemented by a module, a circuit, or a means corresponding to the logic.

The detailed descriptions of the computing device 100 for providing the user interface for the game, the game map 200, the plurality of items 300, and the selection input according to the exemplary embodiment of the present disclosure may be replaced with the contents described above with reference to FIGS. 1 to 7, and the content of the method of providing the user interface for the game based on the foregoing content may be added, modified, and deleted step by step.

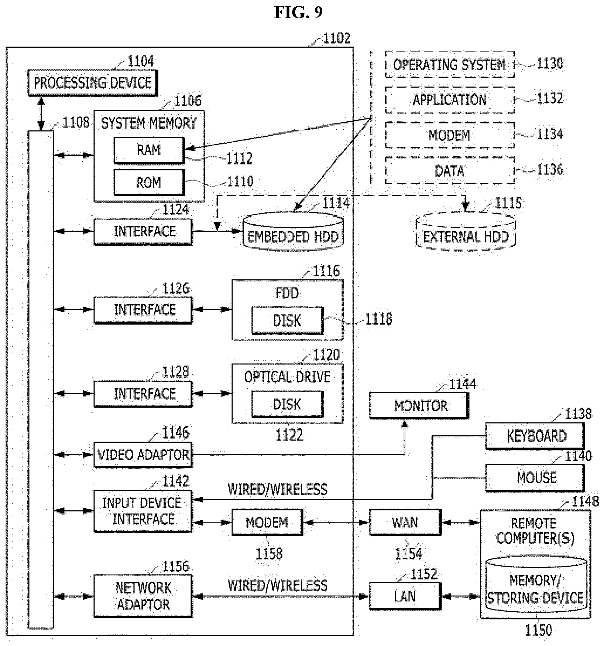

FIG. 9 is a simple and general schematic diagram illustrating an example of a computing environment in which exemplary embodiments of the present disclosure are implementable.

The present disclosure has been described as being generally implementable by the computing device, but those skilled in the art will appreciate well that the present disclosure is combined with computer executable commands and/or other program modules executable in one or more computers and/or be implemented by a combination of hardware and software.

In general, a program module includes a routine, a program, a component, a data structure, and the like performing a specific task or implementing a specific abstract data form. Further, those skilled in the art will appreciate well that the method of the present disclosure may be carried out by a personal computer, a hand-held computing device, a microprocessor-based or programmable home appliance (each of which may be connected with one or more relevant devices and be operated), and other computer system configurations, as well as a single-processor or multiprocessor computer system, a mini computer, and a main frame computer.

The exemplary embodiments of the present disclosure may be carried out in a distribution computing environment, in which certain tasks are performed by remote processing devices connected through a communication network. In the distribution computing environment, a program module may be located in both a local memory storage device and a remote memory storage device.

The computer generally includes various computer readable media. The computer accessible medium may be any type of computer readable medium, and the computer readable medium includes volatile and non-volatile media, transitory and non-transitory media, and portable and non-portable media. As a non-limited example, the computer readable medium may include a computer readable storage medium and a computer readable transmission medium. The computer readable storage medium includes volatile and non-volatile media, transitory and non-transitory media, and portable and non-portable media constructed by a predetermined method or technology, which stores information, such as a computer readable command, a data structure, a program module, or other data. The computer readable storage medium includes a Random Access Memory (RAM), a Read Only Memory (ROM), an Electrically Erasable and Programmable ROM (EEPROM), a flash memory, or other memory technologies, a Compact Disc (CD)-ROM, a Digital Video Disk (DVD), or other optical disk storage devices, a magnetic cassette, a magnetic tape, a magnetic disk storage device, or other magnetic storage device, or other predetermined media, which are accessible by a computer and are used for storing desired information, but is not limited thereto.

The computer readable transport medium generally implements a computer readable command, a data structure, a program module, or other data in a modulated data signal, such as a carrier wave or other transport mechanisms, and includes all of the information transport media. The modulated data signal means a signal, of which one or more of the characteristics are set or changed so as to encode information within the signal. As a non-limited example, the computer readable transport medium includes a wired medium, such as a wired network or a direct-wired connection, and a wireless medium, such as sound, Radio Frequency (RF), infrared rays, and other wireless media. A combination of the predetermined media among the foregoing media is also included in a range of the computer readable transport medium.

An illustrative environment 1100 including a computer 1102 and implementing several aspects of the present disclosure is illustrated, and the computer 1102 includes a processing device 1104, a system memory 1106, and a system bus 1108. The system bus 1108 connects system components including the system memory 1106 (not limited) to the processing device 1104. The processing device 1104 may be a predetermined processor among various commonly used processors. A dual processor and other multi-processor architectures may also be used as the processing device 1104.

The system bus 1108 may be a predetermined one among several types of bus structure, which may be additionally connectable to a local bus using a predetermined one among a memory bus, a peripheral device bus, and various common bus architectures. The system memory 1106 includes a ROM 1110, and a RAM 1112. A basic input/output system (BIOS) is stored in a non-volatile memory 1110, such as a ROM, an erasable and programmable ROM (EPROM), and an EEPROM, and the BIOS includes a basic routing helping a transport of information among the constituent elements within the computer 1102 at a time, such as starting. The RAM 1112 may also include a high-rate RAM, such as a static RAM, for caching data.

The computer 1102 also includes an embedded hard disk drive (HDD) 1114 (for example, enhanced integrated drive electronics (EIDE) and serial advanced technology attachment (SATA)) - the embedded HDD 1114 being configured for exterior mounted usage within a proper chassis (not illustrated) - a magnetic floppy disk drive (FDD) 1116 (for example, which is for reading data from a portable diskette 1118 or recording data in the portable diskette 1118), and an optical disk drive 1120 (for example, which is for reading a CD-ROM disk 1122, or reading data from other high-capacity optical media, such as a DVD, or recording data in the high-capacity optical media). A hard disk drive 1114, a magnetic disk drive 1116, and an optical disk drive 1120 may be connected to a system bus 1108 by a hard disk drive interface 1124, a magnetic disk drive interface 1126, and an optical drive interface 1128, respectively. An interface 1124 for implementing an outer mounted drive includes, for example, at least one of or both a universal serial bus (USB) and the Institute of Electrical and Electronics Engineers (IEEE) 1394 interface technology.

The drives and the computer readable media associated with the drives provide non-volatile storage of data, data structures, computer executable commands, and the like. In the case of the computer 1102, the drive and the medium correspond to the storage of random data in an appropriate digital form. In the description of the computer readable storage media, the HDD, the portable magnetic disk, and the portable optical media, such as a CD, or a DVD, are mentioned, but those skilled in the art will well appreciate that other types of computer readable media, such as a zip drive, a magnetic cassette, a flash memory card, and a cartridge, may also be used in the illustrative operation environment, and the predetermined medium may include computer executable commands for performing the methods of the present disclosure.

A plurality of program modules including an operation system 1130, one or more application programs 1132, other program modules 1134, and program data 1136 may be stored in the drive and the RAM 1112. An entirety or a part of the operation system, the application, the module, and/or data may also be cached in the RAM 1112. It will be well appreciated that the present disclosure may be implemented by several commercially usable operation systems or a combination of operation systems.

A user may input a command and information to the computer 1102 through one or more wired/wireless input devices, for example, a keyboard 1138 and a pointing device, such as a mouse 1140. Other input devices (not illustrated) may be a microphone, an IR remote controller, a joystick, a game pad, a stylus pen, a touch screen, and the like. The foregoing and other input devices are frequently connected to the processing device 1104 through an input device interface 1142 connected to the system bus 1108, but may be connected by other interfaces, such as a parallel port, an IEEE 1394 serial port, a game port, a USB port, an IR interface, and other interfaces.

A monitor 1144 or other types of display devices are also connected to the system bus 1108 through an interface, such as a video adaptor 1146. In addition to the monitor 1144, the computer generally includes other peripheral output devices (not illustrated), such as a speaker and a printer.

The computer 1102 may be operated in a networked environment by using a logical connection to one or more remote computers, such as remote computer(s) 1148, through wired and/or wireless communication. The remote computer(s) 1148 may be a work station, a computing device computer, a router, a personal computer, a portable computer, a microprocessor-based entertainment device, a peer device, and other general network nodes, and generally includes some or an entirety of the constituent elements described for the computer 1102, but only a memory storage device 1150 is illustrated for simplicity. The illustrated logical connection includes a wired/wireless connection to a local area network (LAN) 1152 and/or a larger network, for example, a wide area network (WAN) 1154. The LAN and WAN networking environments are general in an office and a company, and make an enterprise-wide computer network, such as an Intranet, easy, and all of the LAN and WAN networking environments may be connected to a worldwide computer network, for example, the Internet.

When the computer 1102 is used in the LAN networking environment, the computer 1102 is connected to the local network 1152 through a wired and/or wireless communication network interface or an adaptor 1156. The adaptor 1156 may make wired or wireless communication to the LAN 1152 easy, and the LAN 1152 also includes a wireless access point installed therein for the communication with the wireless adaptor 1156. When the computer 1102 is used in the WAN networking environment, the computer 1102 may include a modem 1158, is connected to a communication computing device on a WAN 1154, or includes other means setting communication through the WAN 1154 via the Internet. The modem 1158, which may be an embedded or outer-mounted and wired or wireless device, is connected to the system bus 1108 through a serial port interface 1142. In the networked environment, the program modules described for the computer 1102 or some of the program modules may be stored in a remote memory/storage device 1150. The illustrated network connection is illustrative, and those skilled in the art will appreciate well that other means setting a communication link between the computers may be used.

The computer 1102 performs an operation of communicating with a predetermined wireless device or entity, for example, a printer, a scanner, a desktop and/or portable computer, a portable data assistant (PDA), a communication satellite, predetermined equipment or place related to a wirelessly detectable tag, and a telephone, which is disposed by wireless communication and is operated. The operation includes a wireless fidelity (Wi-Fi) and Bluetooth wireless technology at least. Accordingly, the communication may have a pre-defined structure, such as a network in the related art, or may be simply ad hoc communication between at least two devices.

The Wi-Fi enables a connection to the Internet and the like even without a wire. The Wi-Fi is a wireless technology, such as a cellular phone, which enables the device, for example, the computer, to transmit and receive data indoors and outdoors, that is, in any place within a communication range of a base station. A Wi-Fi network uses a wireless technology, which is called IEEE 802.11 (a, b, g, etc.) for providing a safe, reliable, and high-rate wireless connection. The Wi-Fi may be used for connecting the computer to the computer, the Internet, and the wired network (IEEE 802.3 or Ethernet is used). The Wi-Fi network may be operated at, for example, a data rate of 11 Mbps (802.11a) or 54 Mbps (802.11b) in an unauthorized 2.4 and 5 GHz wireless band, or may be operated in a product including both bands (dual bands).

Those skilled in the art may appreciate that information and signals may be expressed by using predetermined various different technologies and techniques. For example, data, indications, commands, information, signals, bits, symbols, and chips referable in the foregoing description may be expressed with voltages, currents, electromagnetic waves, magnetic fields or particles, optical fields or particles, or a predetermined combination thereof.

Those skilled in the art will appreciate that the various illustrative logical blocks, modules, processors, means, circuits, and algorithm operations described in relationship to the exemplary embodiments disclosed herein may be implemented by electronic hardware (for convenience, called "software" herein), various forms of program or design code, or a combination thereof. In order to clearly describe compatibility of the hardware and the software, various illustrative components, blocks, modules, circuits, and operations are generally illustrated above in relation to the functions of the hardware and the software. Whether the function is implemented as hardware or software depends on design limits given to a specific application or an entire system. Those skilled in the art may perform the function described by various schemes for each specific application, but it shall not be construed that the determinations of the performance depart from the scope of the present disclosure.

Various exemplary embodiments presented herein may be implemented by a method, a device, or a manufactured article using a standard programming and/or engineering technology. A term "manufactured article" includes a computer program, a carrier, or a medium accessible from a predetermined computer-readable storage device. For example, the computer-readable storage medium includes a magnetic storage device (for example, a hard disk, a floppy disk, and a magnetic strip), an optical disk (for example, a CD and a DVD), a smart card, and a flash memory device (for example, an EEPROM, a card, a stick, and a key drive), but is not limited thereto. Further, various storage media presented herein include one or more devices and/or other machine-readable media for storing information.

It shall be understood that a specific order or a hierarchical structure of the operations included in the presented processes is an example of illustrative accesses. It shall be understood that a specific order or a hierarchical structure of the operations included in the processes may be rearranged within the scope of the present disclosure based on design priorities. The accompanying method claims provide various operations of elements in a sample order, but it does not mean that the claims are limited to the presented specific order or hierarchical structure.

The description of the presented exemplary embodiments is provided so as for those skilled in the art to use or carry out the present disclosure. Various modifications of the exemplary embodiments may be apparent to those skilled in the art, and general principles defined herein may be applied to other exemplary embodiments without departing from the scope of the present disclosure. Accordingly, the present disclosure is not limited to the exemplary embodiments suggested herein, and shall be interpreted within the broadest meaning range consistent to the principles and new characteristics presented herein.

## Claims

1. A method of providing a user interface for a game in a user terminal, the method comprising:
receiving a selection input for a first item among a plurality of items existing in a game map from a user; and
changing a location of at least a part of one or more second items so that at least the part of the one or more second items corresponding to the first item is displayed to be adjacent to the first item at least based on the reception of the selection input.

2. The method of claim 1, wherein the game map includes a grid comprising one or more tiles.

3. The method of claim 2, wherein the changing of the location of at least the part of the one or more second items includes automatically changing the location of at least the part of the one or more second items to locations corresponding to second tiles that are usable tiles among the most adjacent tiles to a first tile corresponding to the first item among the one or more tiles, respectively.

4. The method of claim 3, wherein the usable tiles include tiles in which items are not displayed at locations corresponding to one or more tiles among the one or more tiles.

5. The method of any one of claims 1 to 4, wherein the changing of the location of at least the part of the one or more second items includes, when the number of one or more second items is smaller than a preset threshold, automatically changing the locations of all of the one or more second items so that all of the one or more second items are displayed to be adjacent to the first item.

6. The method of any one of claims 1 to 5, wherein the changing of the location of at least the part of the one or more second items includes, when the number of one or more second items is larger than a preset threshold, automatically changing the locations of the items in the number corresponding to the threshold among the one or more second items so that the items in the number corresponding to the threshold among the one or more second items are displayed to be adjacent to the first item.

7. The method of any one of claims 1 to 6, further comprising:
displaying a preset effect on each of the one or more second items in response to the reception of the selection input.

8. The method of any one of claims 1 to 7, wherein the changing of the location of at least the part of the one or more second items so that at least the part of the one or more second items corresponding to the first item is displayed to be adjacent to the first item at least based on the reception of the selection input includes:
allowing a reception of a use input from the user so that at least the part of the one or more second items is displayed to be adjacent to the first item based on the selection input and a preset condition; and
when the use input is received, automatically changing the location of at least the part of the one or more second items so that at least the part of the one or more second items is displayed to be adjacent to the first item.

9. The method of claim 8, wherein the preset condition includes at least one of a condition for a game play of the user and a condition for an item attribute of the first item.

10. The method of claim 9, wherein the condition for the game play of the user includes a condition for a cumulative time that the user has played the game at least.

11. The method of claim 9 or 10, wherein the condition for the item attribute of the first item includes at least one of a condition for a size of the first item and a condition for a movement attribute of the first item.

12. The method of any one of claims 1 to 11, wherein each of the plurality of items receives a movement input from the user, and
the item receiving the movement input is displayed while a location of the item is changed according to the attribute of the movement input, or is merged with at least one item corresponding to the item receiving the movement input among the plurality of items.

13. A computer program stored in a computer readable storage medium, in which the computer program includes commands to perform operations below when is executed by one or more processors of a computing device, the operations comprising:
receiving a selection input for a first item among a plurality of items existing in a game map from a user; and
changing a location of at least a part of one or more second items so that at least the part of the one or more second items corresponding to the first item is displayed to be adjacent to the first item at least based on the reception of the selection input.

14. A user terminal, comprising:
an output unit configured to display a game map in which a plurality of items exists; and
a user input unit configured to receive a selection input for a first item among the plurality of items existing in the game map; and
a processor configured to change a location of at least a part of one or more second items so that at least the part of the one or more second items corresponding to the first item is displayed to be adjacent to the first item at least based on the reception of the selection input.
